Europäisches Patentamt

European Patent Office

Office européen des brevets

(11) Veröffentlichungsnummer: **0 147 529
B1**

(19)

(12) **EUROPÄISCHE PATENTSCHRIFT**

(45) Veröffentlichungstag der Patentschrift:
**20.04.88**

(21) Anmeldenummer: **84110203.1**

(22) Anmeldetag: **28.08.84**

(51) Int. Cl.⁴: **G 01 B 7/00**

(54) **Verfahren zur Ermittlung von Lage und/oder Abmessungen eines Prüfobjekts und Einrichtung zur Durchführung des Verfahrens.**

(30) Priorität: **11.10.83 DE 3336854**

(43) Veröffentlichungstag der Anmeldung:
**10.07.85 Patentblatt 85/28**

(45) Bekanntmachung des Hinweises auf die Patenterteilung:
**20.04.88 Patentblatt 88/16**

(73) Patentinhaber: **Dr. Johannes Heidenhain GmbH,
Nansenstrasse 17, D-8225 Traunreut (DE)**

(72) Erfinder: **Feichtinger, Kurt, Katzwalchen Nr. 26,
D-8221 Palling (DE)**

(84) Benannte Vertragsstaaten:
**AT CH DE FR GB IT LI NL SE**

(56) Entgegenhaltungen:
**EP - A - 0 029 499
DE - A - 2 841 548
FR - A - 2 509 851
GB - A - 2 045 437
US - A - 3 889 540**

**Beschreibung**

Die Erfindung betrifft ein Verfahren zur Ermittlung von Lage und Abmessungen eines Prüfobjekts gemäss dem Oberbegriff des Anspruchs 1.

Aus der europäischen Patentanmeldung 0 029 499 ist eine Einrichtung zur Ermittlung von Abmessungen eines Prüfobjekts mittels eines relativ zu diesem beweglichen Schalttasters sowie wenigstens einer Messeinrichtung zur Erfassung der Relativlage zwischen dem Prüfobjekt und dem Schalttaster bekannt, bei der der Schalttaster zum Zeitpunkt eines Kontaktes mit dem Prüfobjekt ein Signal zum Festhalten des zu diesem Zeitpunkt vorliegenden Messwertes der Messeinrichtung erzeugt.

Die Antastung des Prüfobjekts durch den Schalttaster erfolgt mit unterschiedlichen vorgegebenen Geschwindigkeiten. Es hat sich gezeigt, dass die von der Messeinrichtung ermittelten Messwerte für die Relativlage zwischen dem Prüfobjekt und dem Schalttaster bei der Antastung durch Verformungen des Schalttasters und des Prüfobjekts an der gemeinsamen Kontaktstelle fehlerbehaftet sind. Diese Verformungen sind einmal von der Antastgeschwindigkeit und zum anderen von der Materialpaarung zwischen dem Schalttaster und dem Prüfobjekt abhängig.

Der Erfindung liegt die Aufgabe zugrunde, bei einem Verfahren zur Ermittlung von Lage und Abmessungen eines Prüfobjekts derartige geschwindigkeits- und materialabhängige Messfehler zu eliminieren.

Diese Aufgabe wird erfindungsgemäss durch die Massnahmen des Anspruchs 1 gelöst.

Die mit der Erfindung erzielten Vorteile bestehen insbesondere darin, dass durch die vorab ermittelten Korrekturwerte auf einfache Weise eine schnelle und genaue Korrektur fehlerhafter Messwerte erfolgen kann, so dass unabhängig von der jeweiligen Antastgeschwindigkeit und Materialpaarung zwischen dem Schalttaster und dem Prüfobjekt eine genaue Ermittlung von Lage und Abmessungen des Prüfobjekts und damit ein hocheffizienter Einsatz der Einrichtung ermöglicht werden.

Vorteilhafte Weiterbildungen der Erfindung entnimmt man den Unteransprüchen.

Ein Ausführungsbeispiel der Erfindung wird anhand der Zeichnung näher beschrieben.

Es zeigen

Figur 1 eine Dreikoordinatenmessmaschine,

Figur 2 ein Diagramm der Verlagerung des Schaltpunktes des Schalttasters in Abhängigkeit von der Antastgeschwindigkeit und

Figur 3 eine Einrichtung zur Durchführung des Verfahrens.

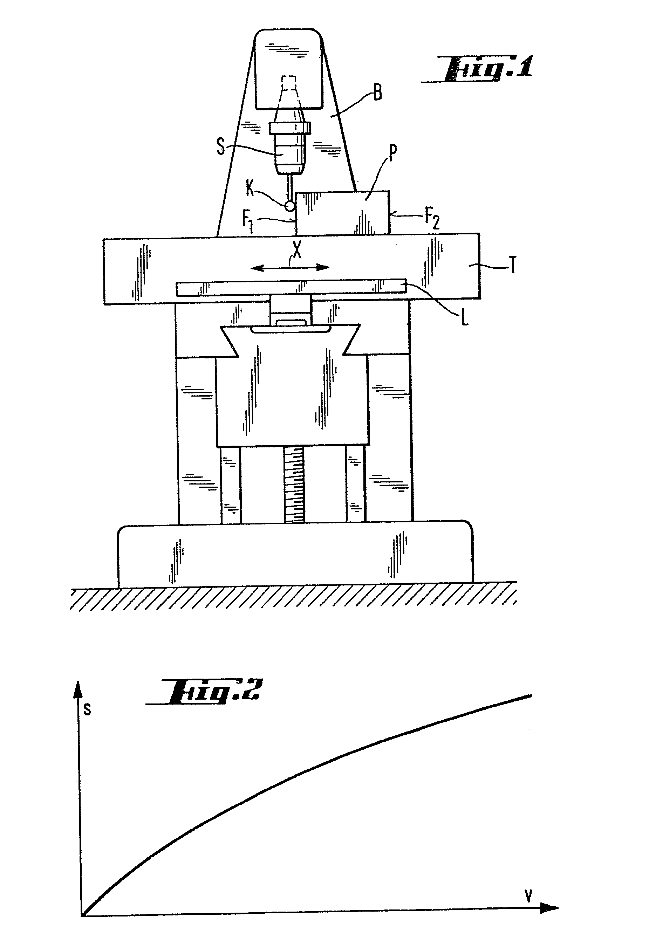

In Figur 1 ist eine Dreikoordinatenmessmaschine mit einem Tisch T zur Aufnahme eines Prüfobjekts P dargestellt, der in drei orthogonalen Maschinenachsen auf einem Maschinenständer B verschiebbar ist. Zur Messung der Verschiebung des Tisches T mit dem Prüfobjekt P in der X-Richtung (die hier allein betrachtet werden soll) ist eine Längenmesseinrichtung L an der Dreikoordinatenmessmaschine vorgesehen. Zum Antasten von Flächen $F_a$, $F_2$ des Prüfobjekts P ist am Maschinenständer B ein in den drei Maschinenachsen wirkender Schalttaster S befestigt.

Zur Ermittlung von Lage und/oder Aussenmessungen des Prüfobjekts P in X-Richtung wird der Tisch T mit dem darauf angeordneten Prüfobjekt P in X-Richtung mit einer bestimmten vorgegebenen Geschwindigkeit verschoben, bis die anzutastende Fläche $F_1$ des Prüfobjekts P mit der Tastkugel K des Schalttasters S kontaktiert; die Verschiebung des Tisches T und damit des Prüfobjekts P wird von der Längenmesseinrichtung L gemessen. Zum Zeitpunkt des Kontaktes zwischen der anzutastenden Fläche $F_1$ des Prüfobjekts P und der Tastkugel K des Schalttasters S gibt der Schalttaster S ein Signal zum Festhalten des zu diesem Zeitpunkt in der Längenmesseinrichtung L vorliegenden Messwertes für die Relativlage zwischen dem Prüfobjekt P und dem Schalttaster S ab. Anschliessend wird auf die gleiche Weise auch die der Fläche $F_1$ gegenüberliegende Fläche $F_2$ des Prüfobjekts P vom Schalttaster S angetastet; aus den beiden gewonnenen Messwerten wird sodann die Lage und Aussenabmessung des Prüfobjekts P in X-Richtung ermittelt.

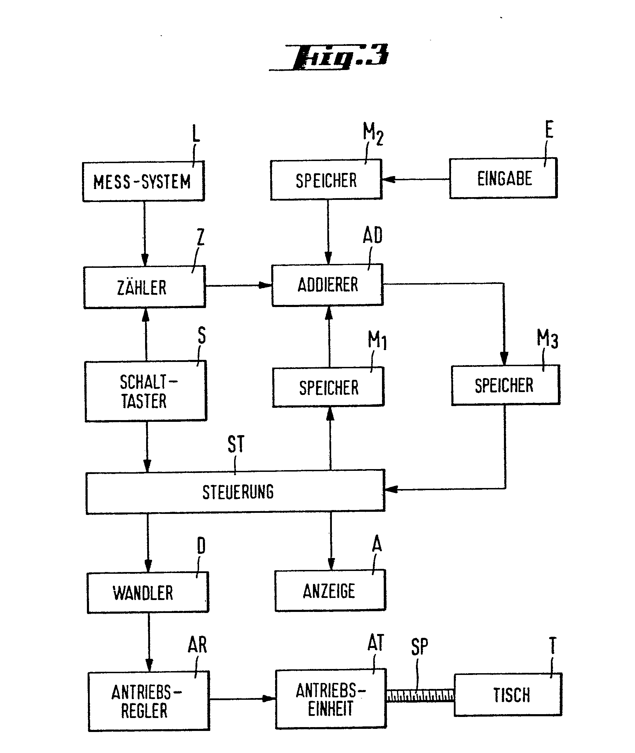

Zur Antastung des Prüfobjekts P ist der Tisch T über eine Spindel SP mittels einer Antriebseinheit AT verschiebbar, die von einer numerischen Steuereinrichtung ST über einen Digital-/Analogwandler D und einen Antriebsregler AR nach Figur 3 beaufschlagt wird. Die Längenmesseinrichtung L zur Messung der Verschiebung des Prüfobjekts P bezüglich des Schalttasters S ist an einen Vorwärts-/Rückwärtszähler Z angeschlossen, der die von der Längenmesseinrichtung L erzeugten Messimpulse vorzeichenrichtig zählt. Der Schalttaster S gibt an den Vorwärts-/Rückwärtszähler Z und an die Steuerung ST zum Zeitpunkt des Kontaktes zwischen den anzutastenden Flächen $F_1$, $F_2$ des Prüfobjekts P und der Tastkugel K ein Signal ab, das im Vorwärts-/Rückwärtszähler Z ein Festhalten und Überführen des vorliegenden Messwertes an einen Addierer AD und in der Steuerung ST ein Anhalten der Relativbewegung zwischen dem Schalttaster S und dem Prüfobjekt P bewirkt.

In Figur 2 ist ein Diagramm der Verlagerung s des Schaltpunktes des Schalttasters S in Abhängigkeit von der Antastgeschwindigkeit v bei einer bestimmten Materialpaarung infolge von Verformungen zwischen der Tastkugel K des Schalttasters S und dem Prüfobjekt P an der gemeinsamen Kontaktstelle dargestellt.

Erfindungsgemäss werden diese Schaltpunktverlagerungen s als vorab ermittelte Korrekturwerte in Abhängigkeit von der Antastgeschwindigkeit v in Form einer Korrekturtabelle in digitaler Form in einem Speicher $M_1$ abgespeichert, der mit dem Addierer AD und der Steuereinrichtung ST verbunden ist. Die vorab ermittelten Korrekturwerte für die verschiedenen Materialpaarungen werden in digitaler Form in einem Speicher $M_2$

abgespeichert, der ebenfalls mit dem Addierer AD und mit einer Eingabeeinheit E verbunden ist; mittels dieser Eingabeeinheit E wird von den im Speicher $M_2$ gespeicherten Korrekturwerten der betreffende Korrekturwert für die vorliegende Materialpaarung ausgewählt und dem Addierer AD zur Verfügung gestellt. Die Steuereinrichtung ST wählt aufgrund der von ihr vorgegebenen Antastgeschwindigkeit den betreffenden Korrekturwert im Speicher $M_1$ aus und stellt ihn dem Addierer AD ebenfalls zur Verfügung.

Der aufgrund des bei der Kontaktierung vom Schalttaster S abgegebenen Signals in den Addierer AD übertragene Messwert wird mit den Korrekturwerten für die betreffende Antastgeschwindigkeit und Materialpaarung beaufschlagt; der korrigierte Messwert wird in einem Speicher $M_3$ abgespeichert und kann anschliessend von der Steuereinrichtung ST in einer Anzeigeeinheit A zur Anzeige gebracht werden. Aus den beiden korrigierten Messwerten bei der Abtastung der Flächen $F_1$, $F_2$ wird die Lage und Aussenabmessung des Prüfobjekts P in X-Richtung erhalten.

Der Addierer AD kann in nicht dargestellter Weise von einem in der Steuereinrichtung ST vorhandenen Rechner gebildet sein, durch den auch eine Weiterverarbeitung der im Speicher $M_3$ abgespeicherten korrigierten Messwerte erfolgen kann.

Die Korrekturwerte können in Abhängigkeit von den jeweiligen diskreten variablen Antastgeschwindigkeiten vorab ermittelt oder jeweils bestimmten Bereichen der Antastgeschwindigkeiten zugeordnet werden.

Unter Materialpaarung werden die Materialeigenschaften der Tastkugel K des Schalttasters S und des anzutastenden Prüfobjekts P hinsichtlich ihrer Härte, das heisst ihres Widerstandes gegen eine mechanische Verformung an der gemeinsamen Kontaktstelle bei der Antastung verstanden.

**Patentansprüche**

1. Verfahren zur Ermittlung von Lage und/oder Abmessungen eines Prüfobjekts mittels eines relativ zu diesem beweglichen Schalttasters sowie wenigstens einer Messeinrichtung zur Messung der Relativlage zwischen dem Prüfobjekt und dem Schalttaster, bei dem der Schalttaster zum Zeitpunkt eines Kontaktes mit dem Prüfobjekt ein Signal zum Festhalten des zu diesem Zeitpunkt vorliegenden Messwertes der Messeinrichtung erzeugt, dadurch gekennzeichnet, dass in Abhängigkeit von der Antastgeschwindigkeit und/oder der Materialpaarung zwischen dem Schalttaster (S) und dem Prüfobjekt (P) vorab ermittelte Korrekturwerte zur Korrektur der durch die Antastgeschwindigkeit und/oder die Materialpaarung fehlerhaften Messwerte herangezogen werden.

2. Verfahren nach Anspruch 1, dadurch gekennzeichnet, dass die in Abhängigkeit von der Antastgeschwindigkeit ermittelten Korrekturwerte in einem Speicher ($M_1$) und/oder die in Abhängigkeit von der Materialpaarung ermittelten Korrekturwerte in einem Speicher ($M_2$) abgespeichert werden.

3. Verfahren nach Anspruch 1, dadurch gekennzeichnet, dass die Korrekturwerte vorab in Abhängigkeit von der jeweiligen variablen Antastgeschwindigkeit ermittelt werden.

4. Verfahren nach Anspruch 1, dadurch gekennzeichnet, dass die vorab ermittelten Korrekturwerte jeweils bestimmten Bereichen der Antastgeschwindigkeit zugeordnet sind.

5. Verfahren nach den Ansprüchen 1 und 2, dadurch gekennzeichnet, dass der von der Messeinrichtung (L) gelieferte Messwert in einem Addierer (AD) mit den betreffenden Korrekturwerten der Speicher ($M_1$, $M_2$) beaufschlagt wird.

6. Verfahren nach den Ansprüchen 1 und 5, dadurch gekennzeichnet, dass der Addierer (AD) von einem Rechner einer Steuereinrichtung (ST) für die Relativverschiebung zwischen dem Schalttaster (S) und dem Prüfobjekt (P) gebildet wird.

7. Verfahren nach den Ansprüchen 2 und 6, dadurch gekennzeichnet, dass der Speicher ($M_1$) von der Steuereinrichtung (ST) und der Speicher ($M_2$) von einer Engabeeinheit (E) zur Auswahl der betreffenden Korrekturwerte beaufschlagt werden.

8. Verfahren nach Anspruch 7, dadurch gekennzeichnet, dass die Auswahl der betreffenden Korrekturwerte im Speicher ($M_1$) aufgrund der von der Steuerung vorgegebenen jeweiligen Antastgeschwindigkeiten bzw. Antastgeschwindigkeitsbereiche erfolgt.

9. Verfahren nach Anspruch 1, dadurch gekennzeichnet, dass die korrigierten Messwerte in einem Speicher ($M_3$) abgespeichert werden.

10. Einrichtung zur Durchführung des Verfahrens nach Anspruch 1 mit einem relativ zu einem Schalttaster beweglichen Prüfobjekt und mit mindestens einer die Relativlage zwischen dem Prüfobjekt und dem Schalttaster messenden Messeinrichtung mit einem Zähler, dadurch gekennzeichnet, dass der Zähler (Z) an einen Addierer (AD) angeschlossen ist, der mit einem Speicher ($M_1$) für Korrekturwerte in Abhängigkeit von der Antastgeschwindigkeit und/oder mit einem Speicher ($M_2$) für Korrekturwerte in Abhängigkeit von der Materialpaarung verbunden ist.

11. Einrichtung nach Anspruch 7, dadurch gekennzeichnet, das der Speicher ($M_1$) mit einer Steuereinrichtung (ST) und der Speicher ($M_2$) mit einer Eingabeeinheit (E) verbunden ist.

**Revendications**

1. Procédé pour déterminer la position et/ou les dimensions d'un objet au moyen d'un palpeur de commutation, mobile par rapport à cet objet, ainsi que d'au moins un dispositif de mesure pour mesurer la position relative entre l'objet et le palpeur de commutation, le palpeur de commutation produisant un signal au moment d'un contact avec l'objet pour conserver la valeur mesurée à ce moment par le dispositif de mesure, caracterise en ce que des valeurs de correction, déterminées préalablement en fonction de la vitesse d'entrée en contact et/ou du couple de matériaux du palpeur de commutation (S) et de l'objet (P), sont utilisées pour la correction des valeurs mesurées entachées d'erreurs dues à la vitesse d'entrée en contact et/ou le couple de matériaux.

2. Procédé selon la revendication 1, caractérisé en ce que les valeurs de correction déterminées en fonction de la vitesse d'entrée en contact sont mémorisées dans une mémoire (M$_1$) et/ou que les valeurs de correction déterminées en fonction du couple de matériaux sont mémorisées dans une mémoire (M$_2$).

3. Procédé selon la revendication 1, caractérise en ce que les valeurs de correction sont déterminées préalablement en fonction de la vitesse d'entrée en contact variable.

4. Procédé selon la revendication 1, caractérisé en ce que les valeurs de correction déterminées préalablement sont chacune attribuées à des plages déterminées de la vitesse d'entrée en contact.

5. Procédé selon les revendication 1 et 2, caractérisé en ce qu'à la valeur mesurée fournie par le dispositif de mesure (L) sont ajoutées dans un additionneur (AD) les valeurs de correction correspondantes des mémoires (M$_1$, M$_2$).

6. Procédé selon les revendications 1 et 5, caractérisé en ce que l'additionneur (AD) est constitué par un calculateur d'un dispositif de commande (ST) destiné au déplacement relatif entre le palpeur de commutation (S) et l'objet (P).

7. Procédé selon les revendications 2 et 6, caractérisé en ce que la mémoire (M$_1$) est sollicitée par le dispositif de commande (ST) et que la mémoire (M$_2$) est sollicitée par une unité d'introduction (E) pour la sélection des valeurs de correction correspondantes.

8. Procédé selon la revendication 7, caractérisé en ce que la sélection des valeurs de correction correspondantes dans la mémoire (M$_1$) se fait sur la base des vitesses d'entrée en contact ou des plages de vitesse d'entrée en contact indiquées préalablement par la commande.

9. Procédé selon la revendication 1, caractérisé en ce que les valeurs mesurées corrigées sont mémorisées dans une mémoire (M$_3$).

10. Dispositif destiné à la mise en œuvre du procédé selon la revendication 1 avec un objet pouvant se déplacer par rapport à un palpeur de commutation et avec au moins un dispositif de mesure, comportant un compteur, mesurant la position relative entre l'objet et le palpeur de commutation, caractérisé en ce que le compteur (Z) est connecté à un additionneur (AD) qui est relié à une mémoire (M$_1$) pour des valeurs de correction en fonction de la vitesse d'entree en contact et/ou à une mémoire (M$_2$) pour des valeurs de correction en fonction du couple de matériaux.

11. Dispositif selon la revendication 7, caractérisé en ce que la mémoire (M$_1$) est reliée à un dispositif de commande (ST) et que la mémoire (M$_2$) est reliée à une unité d'introduction (E).

## Claims

1. Method for determining the position and/or dimensions of a test specimen by means of a switching probe which is movable relative thereto and also at least one measuring device for measuring the relative position between the test specimen and the switching probe, in which at the moment of contact with the test specimen the switching probe generates a signal for recording the measured value of the measuring device which is present at this moment, characterised in that correction values determined previously as a function of the sensing speed and/or the mating of materials between the switching probe (S) and the test specimen (P), are used to correct the measured values which are erroneous due to the sensing speed and/or the pairing of materials.

2. Method according to claim 1, characterised in that the correction values determined as a function of the sensing speed are stored in a memory (M$_1$) and/or the correction values determined as a function of the pairing of materials are stored in a memory (M$_2$).

3. Method according to claim 1, characterised in that the correction values are determined previously as a function of the respective variable sensing speed.

4. Method according to claim 1, characterised in that the previously determined correction values are respectively coordinated with certain ranges of sensing speed.

5. Method according to claims 1 and 2, characterised in that the measured value supplied by the measuring device (L) is acted upon in an adder (AD) by the respective correction values of the memories (M$_1$, M$_2$).

6. Method according to claims 1 and 5, characterised in that the adder (AD) is formed by a computer of a control unit (ST) for relative displacement between the switching probe (S) and the test specimen (P).

7. Method according to claims 2 and 6, characterised in that the memory (M$_1$) is acted upon by the control unit (ST) and the memory (M$_2$) is acted upon by an input unit (E) for selection of the respective correction values.

8. Method according to claim 7, characterised in that the respective correction values in the memory (M$_1$) are selected on the basis of the respective sensing speeds or sensing speed ranges predetermined by the control means.

9. Method according to claim 1, characterised in that the corrected measured values are stored in a memory (M$_3$).

10. Device for carrying out the method according to claim 1 with a test specimen which is movable relative to a switching probe and with at least one measuring device with a counter which measures the relative position between the test specimen and the switching probe, characterised in that the counter (Z) is connected to an adder (AD) which is connected to a memory (M$_1$) for correction values as a function of the sensing speed and/or to a memory (M$_2$) for correction values as a function of the pairing of materials.

11. Device according to claim 7, characterised in that the memory (M$_1$) is connected to a control unit (ST), and the memory (M$_2$) is connected to an input unit (E).

Fig.1

Fig.2

2/2

# Fig.3